# EUROPEAN PATENT APPLICATION

(11) **EP 4 765 320 A1**
(43) Date of publication of application: **24.06.2026**
(21) Application number: 25790553.9
(22) Date of filing: 21.03.2025
(51) Int. Cl.: H01M 10/44, H01M 10/42, H01M 10/48, H02J 7/00

(54) **BATTERY MANAGEMENT APPARATUS AND OPERATION METHOD THEREFOR**

(30) Priority: 17.04.2024 KR 20240051326
(71) Applicant: LG Energy Solution, Ltd., Seoul 07335 (KR)
(72) Inventor: JEONG, Doo Ho, Daejeon 34122 (KR)
(74) Representative: Plasseraud IP
(86) International application number: PCT/KR2025/003670
(87) International publication number: WO 2025/220894

(57) **Abstract**

A battery management device according to an embodiment of this document includes a conversion circuit configured to switch an electrical connection between a first battery pack and a second battery pack, and one or more processors configured to determine, based on an operation mode of a battery system including the first battery pack and the second battery pack, a connection mode including a multi-connection mode or a single connection mode between the first battery pack and the second battery pack and a load connected to the battery system and manage an operation of the battery system by controlling the conversion circuit based on the connection mode.

## Description

### TECHNICAL FIELD

### Cross-reference to Related Applications

This application claims priority from Korean Patent Application No. 10-2024-0051326, filed on April 17, 2024, the disclosure of which is incorporated by reference herein.

### Technical Field

Embodiments disclosed in this document relate to a battery management device and an operating method thereof.

### BACKGROUND ART

Recently, research and development on secondary batteries have been actively conducted. Here, secondary batteries are batteries that can be charged and discharged, and may be interpreted as including both conventional Ni/Cd batteries, Ni/MH batteries, and recent lithium-ion batteries. Recently, the scope of use of the secondary batteries has expanded to include a power source for electric vehicles, and the secondary batteries are attracting attention as a next-generation energy storage medium.

An electric vehicle receives electricity from the outside to charge a battery pack, and then discharge the battery pack to drive a motor and obtain power. A driving range of this electric vehicle is closely related to a capacity of the battery pack, and various studies are currently being conducted to increase the driving range of the vehicle. In addition, a rated voltage of a rapid charger is increasing to shorten the charging time of the battery pack. However, the battery pack mounted on a typical electric vehicle has the problem that charging and discharging can only be done under a single rated voltage, and the capacity of the battery pack is also limited.

### DISCLOSURE OF THE INVENTION

### TECHNICAL PROBLEM

Embodiments disclosed in this document provide a battery management device and an operating method thereof capable of managing charging and discharging of a battery system including a plurality of battery packs.

Embodiments disclosed in this document provide a battery management device and an operating method thereof capable of controlling a connection between a plurality of battery packs based on an operation mode of a battery system.

The technical problems of the embodiments disclosed in this document are not limited to the technical problems mentioned above, and other technical problems that are not mentioned may be clearly understood by those skilled in the art from the descriptions below.

### TECHNICAL SOLUTION

A battery management device according to an embodiment of this document includes a conversion circuit configured to switch an electrical connection between a first battery pack and a second battery pack, and one or more processors configured to determine, based on an operation mode of a battery system including the first battery pack and the second battery pack, a connection mode including a multi-connection mode or a single connection mode between the first battery pack and the second battery pack and a load connected to the battery system and manage an operation of the battery system by controlling the conversion circuit based on the connection mode.

According to the embodiment, the conversion circuit may include a buck switching unit configured to convert an input voltage value input to the conversion circuit to a value smaller than the input voltage value, a boost switching unit configured to convert the input voltage value input to the conversion circuit to a value larger than the input voltage value, and a selection switching unit configured to switch the connection mode.

According to the embodiment, the buck switching unit may include a first switching element and a second switching element, the boost switching unit may include a third switching element and a fourth switching element, and the selection switching unit may include a fifth switching element, a sixth switching element, and a seventh switching element.

According to the embodiment, the conversion circuit may further include an inductor configured such that one end thereof is connected to a first node to which the first switching element, the second switching element, and the fifth switching element are connected, and the other end thereof is connected to a second node to which the third switching element, the fourth switching element, and the sixth switching element are connected, the input voltage may be applied to the fourth switching element and the seventh switching element, and an output voltage of the conversion circuit may be applied to the first switching element and the seventh switching element.

According to the embodiment, the operation mode may include a first discharging mode for discharging one of the first battery pack and the second battery pack, or a second discharging mode for discharging the first battery pack and the second battery pack.

According to an embodiment, the one or more processors may be configured to determine the connection mode as the single connection mode, which is a mode for connecting one of the first battery pack and the second battery pack and the load, when the operation mode is the first discharging mode, and determine the connection mode as the multi-connection mode, which is a mode for connecting the first battery pack and the second battery pack in parallel with each other, when the operation mode is the second discharging mode.

According to the embodiment, the one or more processors may be configured to control the selection switching unit to control the first battery pack to be connected in parallel with the second battery pack, when the connection mode is determined as the multi-connection mode.

According to the embodiment, the battery management device may further include an interface configured to obtain a voltage of the first battery pack and a voltage of the second battery pack, and the one or more processors may be configured to control the buck switching unit and the boost switching unit so that the output voltage of the conversion circuit has a value corresponding to the voltage of the first battery pack when a voltage difference value, which is a difference between the voltage of the second battery pack and the voltage of the first battery pack, is larger than a predetermined threshold value.

According to the embodiment, an amount of change in the output voltage of the conversion circuit is proportional to the conduction time of the buck switching unit and the boost switching unit, and the one or more processors may manage the output voltage of the conversion circuit by controlling the conduction time.

According to the embodiment, the one or more processors may control the selection switching unit to control the first battery pack or the second battery pack to be connected to the load when the connection mode is determined as the single connection mode.

An operating method of a battery management device according to an embodiment of this document includes determining, based on an operation mode of a battery system including the first battery pack and the second battery pack, a connection mode including a multi-connection mode or a single connection mode between the first battery pack and the second battery pack and a load connected to the battery system and managing an operation of the battery system by controlling a conversion circuit configured to switch an electrical connection between the first battery pack and the second battery pack, based on the connection mode.

According to the embodiment, the conversion circuit may include a buck switching unit configured to convert an input voltage value input to the conversion circuit to a value smaller than the input voltage value, a boost switching unit configured to convert the input voltage value input to the conversion circuit to a value larger than the input voltage value, and a selection switching unit configured to switch the connection mode.

According to the embodiment, the buck switching unit may include a first switching element and a second switching element, the boost switching unit may include a third switching element and a fourth switching element, and the selection switching unit may include a fifth switching element, a sixth switching element, and a seventh switching element.

According to the embodiment, the conversion circuit may further include an inductor configured such that one end thereof is connected to a first node to which the first switching element, the second switching element, and the fifth switching element are connected, and the other end thereof is connected to a second node to which the third switching element, the fourth switching element, and the sixth switching element are connected, the input voltage may be applied to the fourth switching element and the seventh switching element, and an output voltage of the conversion circuit may be applied to the first switching element and the seventh switching element.

According to the embodiment, the operation mode may include a first discharging mode for discharging one of the first battery pack and the second battery pack, or a second discharging mode for discharging the first battery pack and the second battery pack.

According to an embodiment, in the determining of the connection mode, the connection mode may be determined as the single connection mode, which is a mode for connecting one of the first battery pack and the second battery pack and the load, when the operation mode is the first discharging mode, and the connection mode may be determined as the multi-connection mode, which is a mode for connecting the first battery pack and the second battery pack in parallel with each other, when the operation mode is the second discharging mode.

The managing of the power of the battery system may include controlling the selection switching unit to control the first battery pack to be connected in parallel with the second battery pack, when the connection mode is determined as the multi-connection mode.

According to the embodiment, the operating method may further include obtaining a voltage of the first battery pack and a voltage of the second battery pack, and the managing of the power of the battery system may include controlling the buck switching unit and the boost switching unit so that the output voltage of the conversion circuit has a value corresponding to the voltage of the first battery pack when a voltage difference value, which is a difference between the voltage of the second battery pack and the voltage of the first battery pack, is larger than a predetermined threshold value.

According to the embodiment, an amount of change in the output voltage of the conversion circuit is proportional to the conduction time of the buck switching unit and the boost switching unit, and the one or more processors may manage the output voltage of the conversion circuit by controlling the conduction time.

According to the embodiment, in the managing of the power of the battery system, the selection switching unit may be controlled to control the first battery pack or the second battery pack to be connected to the load when the connection mode is determined as the single connection mode.

### ADVANTAGEOUS EFFECTS

The battery management device and an operating method thereof disclosed in this document can manage charging and discharging of the battery system including the plurality of battery packs.

The battery management device and an operating method thereof disclosed in this document can control a connection between the plurality of battery packs based on an operation mode of the battery system.

In addition, various effects that can be directly or indirectly identified through this document can be provided.

### BRIEF DESCRIPTION OF THE DRAWINGS

FIG. 1 is a block diagram showing a battery pack according to one embodiment disclosed in this document.
FIG. 2 is a block diagram showing a battery management device according to an embodiment disclosed in this document.
FIG. 3 is a diagram showing a battery system and a conversion circuit according to an embodiment disclosed in this document.
FIG. 4 is a diagram showing an operating method of a conversion circuit according to an embodiment disclosed in this document.
FIG. 5 is a flowchart showing an operation of a battery management device according to an embodiment disclosed in this document.
FIG. 6 is a block diagram showing a hardware configuration of a computing system for performing an operating method of a battery management device according to an embodiment disclosed in this document.

### MODE FOR CARRYING OUT THE INVENTION

Hereinafter, embodiments described in this document are described with reference to the accompanying drawings. However, this is not intended to limit the disclosure of this document to a specific embodiment, but should be understood to include various modifications, equivalents, and/or alternatives of the embodiments of the present invention.

Various embodiments of this document and the terms used therein are not intended to limit the technical features described in this document to a specific embodiment, but should be understood to include various modifications, equivalents, or alternatives of the embodiment.

In connection with the description, similar reference numerals may be used for similar or related components. The singular form of a noun corresponding to an item may include one or more of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component can be connected to the other component directly (e.g., in a wired manner), or wirelessly or through a third component.

According to an embodiment, the method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to various embodiments, each of the components (e.g., modules or programs) described above may include a single or plurality of entities, and some of the plurality of entities may be separated and placed in other components. According to various embodiments, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

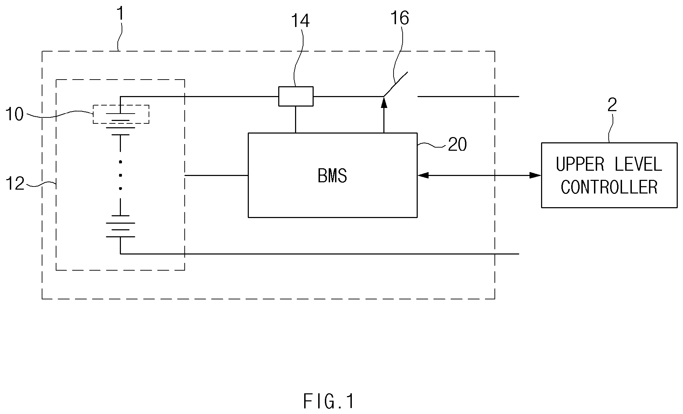

FIG. 1 is a block diagram showing a battery pack according to an embodiment disclosed in this document.

Referring to FIG. 1, a battery pack 1 may include a battery unit 12, a sensor unit 14, a switching unit 16, and a battery management system (BMS) 20. In this case, the battery pack 1 may be provided with a plurality of battery units 12, sensor units 14, switching units 16, and battery management systems 20.

According to the embodiment, the battery unit 12 may supply power to a target device (not shown). To this end, battery unit 12 may be electrically connected to the target device. Here, the target device may include an electrical, electronic, or mechanical device that operates by receiving power from the battery pack 1. For example, the target device may be an electric vehicle (EV), but is not limited thereto.

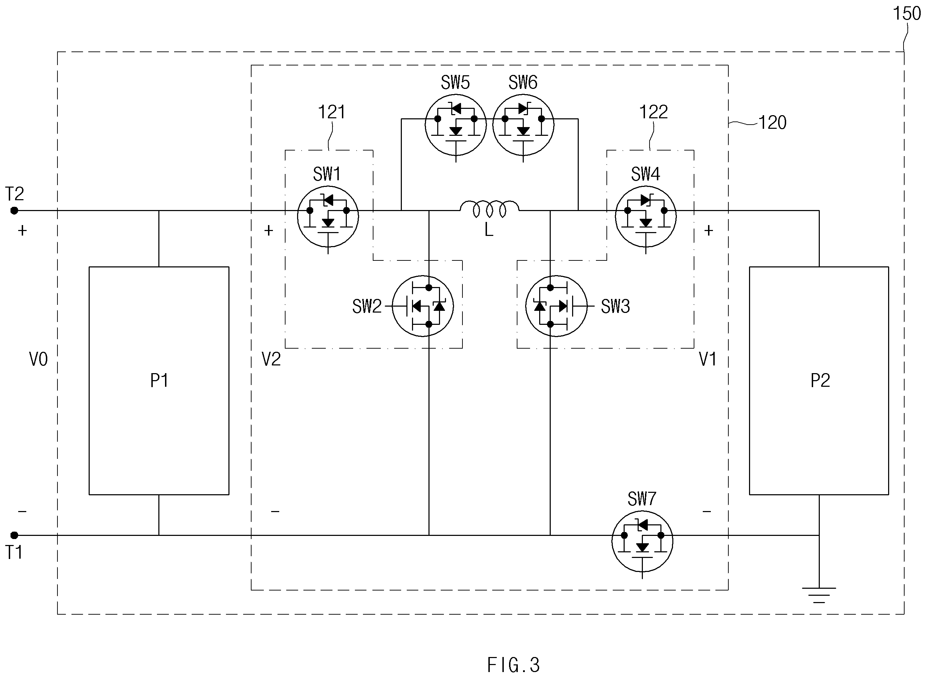

According to the embodiment, the battery unit 12 may include at least one battery cell 10 that can be charged and discharged. Here, the battery cell 10 may be a basic unit of a battery cell that can be used by charging and discharging electric energy. For example, the battery cell 10 may be a lithium-ion (Li-ion) battery, a lithium-ion polymer (Li-ion polymer) battery, a nickel-cadmium (Ni-Cd) battery, a nickel-metal hydride (Ni-MH) battery, etc., but is not limited thereto. The description of a detailed structure of the battery cell 10 will be made with reference to FIG. 3.

According to the embodiment, a plurality of battery units 12 may be connected in series or in parallel. For example, the battery unit 12 may be a battery module, a battery bank, or a set of battery cells (cell-to-pack structure).

According to the embodiment, the sensor unit 14 may obtain information related to the battery unit 12. According to the embodiment, the sensor unit 14 may obtain values (or information) related to a state of each battery unit 12. In an embodiment, the values related to the state may include one or more values for voltage, current, resistance, state of charge (SOC), state of health (SOH), or temperature of the battery cell, or a combination thereof.

According to the embodiment, the sensor unit 14 may provide information on each of a plurality of battery units 12 to the battery management system 20.

According to the embodiment, the switching unit 16 may include a device for controlling a current flow for charging or discharging the battery unit 12. For example, the switching unit 16 may include at least one relay and/or magnetic contactor, etc., depending on the specifications of the battery pack 1.

According to the embodiment, the battery management system (BMS) 20 may control or manage the battery pack 1 to prevent overcharge and overdischarge by monitoring the voltage, current, temperature, etc. of the battery pack 1. For example, the battery management system 20 is an interface that receives values obtained by measuring various parameters described above, and may include a plurality of terminals, a circuit connected to these terminals to process the received values, etc. In addition, the battery management system 20 may control the sensor unit 14 and/or the switching unit 16. For example, the battery management system 20 may be connected to the plurality of battery units 12 to monitor the state of each of the plurality of battery units 12 and control ON/OFF of a relay or a contactor.

According to the embodiment, an operation of the battery management system 20 may be performed by the battery management system (BMS) in a vehicle, and may also be performed in various devices such as a server, a cloud, a charger, or a charger/discharger.

An upper level controller 2 may transmit a control signal for the plurality of battery units 12 to the battery management system 20. Accordingly, the operation of the battery management system 20 may be controlled based on the signal received from the upper level controller 2.

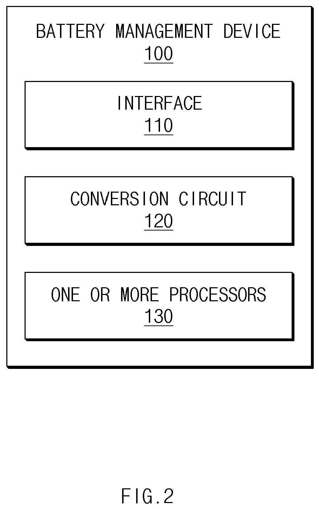

According to the embodiment, the battery management system 20 may include a battery management device 100 of FIG. 2. According to another embodiment, the battery management system 20 may be a different system from the battery management device 100 of FIG. 2. That is, the battery management device 100 of FIG. 2 may be included in the battery pack 1 or may be configured as another device external to the battery pack 1. Hereinafter, for convenience of description, the description will be made on the assumption that the battery management device 100 is composed of another device external to the battery pack 1. In addition, the operation of the battery management device 100 below may be performed by a battery management system (BMS) in the vehicle, as well as by various devices such as a server, a cloud, a charger, or a charger/discharger.

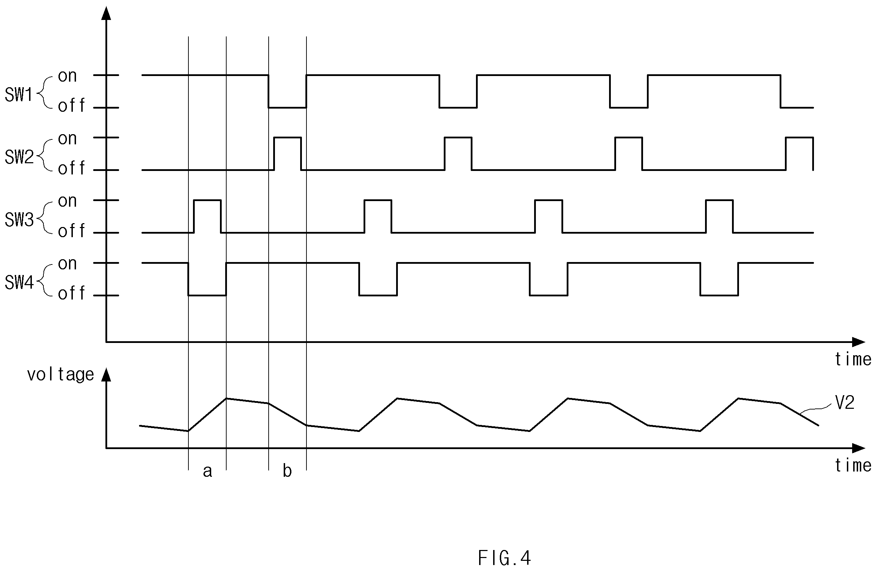

FIG. 2 is a block diagram showing a battery management device according to an embodiment disclosed in this document. FIG. 3 is a diagram showing a battery system and a conversion circuit according to an embodiment disclosed in this document. FIG. 4 is a diagram showing an operating method of the conversion circuit according to an embodiment disclosed in this document. The description of the operation of the battery management device 100 illustrated in FIG. 2 will be made in detail with reference to FIGS. 3 and 4 below.

First, referring to FIGS. 2 and 3, the battery management device 100 according to an embodiment disclosed in this document may diagnose a state of a battery system 150 including one or more battery packs and manage the operation of the battery system 150. Here, the operation of the battery pack may mean a charging and/or discharging operation. For example, the battery system 150 may include a first battery pack P1 and a second battery pack P2. Here, the second battery pack P2 may be configured to be directly or indirectly connected to the first battery pack P1. For example, the first battery pack P1 may mean a battery pack mounted on a vehicle, and the second battery pack P2 may mean a battery pack that can be additionally mounted on the first battery pack P1 by a user.

According to the embodiment, the battery management device 100 may include an interface 110, a conversion circuit 120, and one or more processors 130 to manage the operation of the battery system 150. However, it is not limited thereto, and other components may be further included in the battery management device 100, and two or more components may be integrated into one, or one component may be divided into two or more components.

According to the embodiment, the interface 110 may obtain state data related to the battery system 150. Here, the interface 110 may mean a configuration capable of communicating with an external device in a wired manner and/or wirelessly. For example, the state data may include voltage data, current data, temperature data, or resistance data of each of the first battery pack P1 and the second battery pack P2 included in the battery system 150. In addition, the state data may include voltage data, current data, temperature data, or resistance data of the output terminals T1 and T2 of the battery system 150.

According to the embodiment, the interface 110 may obtain voltage data by communicating with the sensor unit 14 (see FIG. 1). In addition, the interface 110 may obtain voltage data by communicating with other infrastructure such as the BMS 20 (see FIG. 1), a server, and a cloud.

According to the embodiment, the interface 110 may obtain the voltage of the battery system 150 or the battery pack (the first battery pack P1 and/or the second battery pack P2). For example, the interface 110 may obtain the voltage of each of the first battery pack P1 and the second battery pack P2 or the voltage of the battery system 150 for each unit time. According to the embodiment, the interface 110 may continuously obtain voltage data in a charging section, a resting section after charging, a discharging section, and/or a resting section after discharging of the battery pack over time. According to the embodiment, the interface 110 may include a voltage monitoring circuit or a sensor.

According to the embodiment, the conversion circuit 120 may convert a voltage V0 of the output terminals T1 and T2 of the battery system 150 or switch an electrical connection between the plurality of battery packs included in the battery system 150. According to the embodiment, the conversion circuit 120 may switch the electrical connection between the first battery pack P1 and the second battery pack P2.

According to the embodiment, the conversion circuit 120 may be connected to the first battery pack P1 and the second battery pack P2 of the battery system 150 and convert the voltage V0 of the output terminals T1 and T2 of the battery system 150. For example, the conversion circuit 120 may convert the voltage V0 of the output terminals T1 and T2 of the battery system 150 by converting a connection state of the first battery pack P1 and the second battery pack P2 to a serial connection state, a parallel connection state, an insulation state, etc. In addition, the conversion circuit 120 may convert a voltage V1 output from the second battery pack P2 into a converted voltage V2.

For example, in the charging state of the battery system 150, the conversion circuit 120 may be configured to charge at least one of the plurality of battery packs included in the battery system 150 based on the type of power source (e.g. generator or alternator or external charger) connected to the battery system 150. Here, the external charger may include a charger with a rated voltage of approximately 400 V or a charger with a rated voltage of approximately 800 V.

According to the embodiment, in a discharge state of the battery system 150, the conversion circuit 120 may be configured to discharge one or more of the plurality of battery packs included in the battery system 150 based on a driving mode of a load (e.g., a vehicle) configured to be connected to the battery system 150. Here, the driving mode may include a short-distance driving mode, a long-distance driving mode, a stop mode, etc. Through this, the battery management device 100 may configure the battery system 150 in response to the type of power source or the driving mode.

According to the embodiment, the conversion circuit 120 may be controlled by one or more processors 130 of the battery management device 100.

According to the embodiment, one or more processors 130 may perform operations of the battery management device 100. For example, one or more processors 130 may process data acquired from the interface 110 to manage the operation of the battery system 150. According to the embodiment, one or more processors 130 may determine a connection mode of the battery system 150 based on voltage data acquired from the interface 110 and/or an operation mode of the battery system 150, and control the conversion circuit 120 based on the connection mode.

According to the embodiment, one or more processors 130 may determine the operation mode of the battery system 150 based on the type of power source connected to the battery system 150 or the driving mode of the load. Here, the type of power source may mean the classification of the power source according to the rated voltage (e.g., approximately 400 V or approximately 800 V) of the power source used to charge the battery system 150, and the driving mode may include a short-distance driving mode, a long-distance driving mode, a stop mode, etc.

According to the embodiment, the operation mode may include a first charging mode for charging one of the first battery pack P1 and the second battery pack P2, a second charging mode for charging the first battery pack P1 and the second battery pack P2, a first discharging mode for discharging one of the first battery pack P1 and the second battery pack P2, and a second discharging mode for discharging the first battery pack P1 and the second battery pack P2.

According to the embodiment, one or more processors 130 may determine a connection mode between the battery system 150 and another device (e.g., a power source or a load) based on the operation mode of the battery system 150 including the first battery pack P1 and the second battery pack P2. Here, the connection mode may include a multi-connection mode or a single connection mode. According to the embodiment, one or more processors 130 may determine the number of battery packs connected to the power source and a connection relationship between the battery packs according to the type of power source. In addition, one or more processors 130 may determine the number of battery packs connected to the load and the connection relationship between the battery packs according to the driving mode. Through this, the battery management device 100 may charge the battery system 150 in response to power sources of various rated voltages and manage the discharge power of the battery system 150 in response to various driving modes.

According to the embodiment, one or more processors 130 may determine the connection mode as a single connection mode when the operation mode is the first charging mode. Here, the first charging mode may mean a mode for charging one of the first battery pack P1 and the second battery pack P2, and the single connection mode may mean a mode for connecting one of the first battery pack P1 and the second battery pack P2 included in the battery system 150 to a power source. For example, when the battery system 150 is connected to a power source corresponding to the rated voltage (e.g., rated voltage of approximately 400 V) of one of the battery packs (e.g., the first battery pack P1, the second battery pack P2, etc.) included in the battery system 150 and is charged, one or more processors 130 may determine the operation mode of the battery system 150 as the first charging mode.

According to the embodiment, one or more processors 130 may determine the connection mode as the multi-connection mode when the operation mode is the second charging mode. Here, the second charging mode may mean a mode for charging the first battery pack P1 and the second battery pack P2, and the multi-connection mode may mean a mode for connecting the first battery pack P1 and the second battery pack P2 included in the battery system 150 in series. For example, when the battery system 150 is connected to a high-voltage power source for rapid charging having a rated voltage (e.g., rated voltage of approximately 800 V) higher than the rated voltage (e.g., rated voltage of approximately 400 V) of one of the battery packs (e.g., the first battery pack P1 or the second battery pack P2) included in the battery system 150 and is charged, one or more processors 130 may determine the operation mode of the battery system 150 as the second charging mode.

According to the embodiment, one or more processors 130 may determine the connection mode as the single connection mode when the operation mode is the first discharging mode. Here, the first discharging mode may mean a mode for discharging one of the first battery pack P1 and the second battery pack P2, and the single connection mode may mean a mode for connecting a load to one of the first battery pack P1 and the second battery pack P2 included in the battery system 150. For example, when the driving mode is the short-distance driving mode, one or more processors 130 may determine the operation mode of the battery system 150 as the first discharging mode.

According to the embodiment, one or more processors 130 may determine the connection mode as the multi-connection mode when the operation mode is the second discharging mode. Here, the second discharging mode may mean a mode for discharging the first battery pack P1 and the second battery pack P2, and the multi-connection mode may mean a mode for connecting the first battery pack P1 and the second battery pack P2 included in the battery system 150 and the load in parallel with each other. For example, when the driving mode is the long-distance driving mode, one or more processors 130 may determine the operation mode of the battery system 150 as the second discharging mode.

According to the embodiment, when the driving mode is the stop mode, one or more processors 130 may determine the operation mode of the battery system 150 as a pack balancing mode. In addition, when the operation mode is the pack balancing mode, one or more processors 130 may perform pack balancing between the first battery pack P1 and the second battery pack P2 by controlling the conversion circuit 120 to operate as a bidirectional DC-DC converter. In this case, one or more processors 130 may discharge the first battery pack P1 to charge the second battery pack P2, or discharge the second battery pack P2 to charge the first battery pack P1.

According to the embodiment, the conversion circuit 120 may include one or more switching elements (e.g., SW1, SW2, ..., SW7) for switching. In FIG. 3, the conversion circuit 120 is illustrated as including a first switching element SW1 to a seventh switching element SW7, but is not limited thereto, and the conversion circuit 120 may include N (N is an integer larger than or equal to 1) switching elements. In addition, the conversion circuit 120 may include switching elements such as a switch, a relay, a diode, and a transistor.

According to the embodiment, the conversion circuit 120 may convert the input voltage V1 by switching the electrical connection between the first battery pack P1 and the second battery pack P2. For example, the conversion circuit 120 may include a buck/boost switching units 121 and 122 and an inductor L. Through this, the conversion circuit 120 may switch the electrical connection between the first battery pack P1 and the second battery pack P2.

According to the embodiment, the buck/boost switching units 121 and 122 may include a buck switching unit 121 for voltage step-down and a boost switching unit 122 for voltage step-up. Here, the buck switching unit 121 may be configured to convert the input voltage V1 value input to the conversion circuit 120 into a value smaller than the input voltage V1 value by performing pulse width modulation (PWM) on the switching element. In addition, the boost switching unit 122 can be configured to convert the input voltage V1 value input to the conversion circuit 120 into a value larger than the input voltage V1 value by performing pulse width modulation (PWM) on the switching element.

For example, the buck switching unit 121 may include a first switching element SW1 and a second switching element SW2, and the boost switching unit 122 may include a third switching element SW3 and a fourth switching element SW4. However, it is not limited thereto, and the buck switching unit 121 and the boost switching unit 122 may be integrated and replaced with other configurations. Through this, the battery management device 100 may manage the converted voltage to correspond to the voltage of the first battery pack P1 by converting the voltage output from the second battery pack P2.

According to the embodiment, the conversion circuit 120 may change the connection mode of the battery system 150 by switching the electrical connection between the first battery pack P1 and the second battery pack P2. Here, the connection mode may mean a connection form between the first battery pack P1 and the second battery pack P2 included in the battery system 150. For example, the connection mode may include a multi-connection mode or a single connection mode.

According to the embodiment, when a plurality of battery packs are included in the battery system 150, the multi-connection mode may include a series connection mode or a parallel connection mode between the plurality of battery packs. In addition, when a plurality of battery packs are included in the battery system 150, the single connection mode may mean that one of the plurality of battery packs is connected to a power source or a load. In another aspect, the single connection mode may mean a mode in which the plurality of battery packs included in the battery system 150 are insulated from each other.

According to the embodiment, the conversion circuit 120 may include a selection switching unit that switches the connection mode. For example, the selection switching unit may include the first switching element SW1 to the seventh switching element SW7. According to the embodiment, some of the switching elements (e.g., the first switching element SW1 to the fourth switching element SW4) of the selection switching unit may be integrated with at least a part of the buck switching unit 121 and/or the boost switching unit 122. In addition, the configuration of the selection switching unit is not limited to the embodiment of FIG. 3, and the switching elements included in the selection switching unit may be integrated with each other or replaced with different switching elements.

According to the embodiment, the first switching element SW1 to the seventh switching element SW7 may be controlled to be turned on and/or off by one or more processors 130. Through this, the conversion circuit 120 may perform the operation of a buck converter, a boost converter, or a buck-boost converter. In the embodiment of FIG. 3, each of the first switching element SW1 to the seventh switching element SW7 is illustrated as a unidirectional MOSFET, but is not limited thereto, and may be replaced with various switching elements such as a bidirectional MOSFET, a transistor, a switch, or a relay, or integrated therewith.

According to an embodiment, the inductor L may be connected to the buck switching unit 121 and the boost switching unit 122. For example, the conversion circuit 120 may include an inductor L configured such that one end thereof is connected to a first node to which the first switching element SW1, the second switching element SW2, and the fifth switching element SW5 are connected, and the other end thereof is connected to a second node to which the third switching element SW3, the fourth switching element SW4, and the sixth switching element SW6 are connected.

According to the embodiment, the input voltage V1 may be applied to the fourth switching element SW4 and the seventh switching element SW7 of the conversion circuit 120. In addition, the output voltage V2 of the conversion circuit 120 may be applied to the first switching element SW1 and the seventh switching element SW7 of the conversion circuit 120.

According to the embodiment, one or more processors 130 may control the battery system 150 to operate in the multi-connection mode or the single connection mode by controlling the selection switching unit (e.g., the first switching element SW1 to the seventh switching element SW7) to be turned on or off. According to the embodiment, when the battery system 150 is connected to a power source of rated voltage (e.g., rated voltage of approximately 400 V), one or more processors 130 may control the first battery pack P1 to be single-connected to the power source. For example, when the operation mode is the first charging mode and the connection mode is determined to be a single connection mode, one or more processors 130 may control the first switching element SW1 to the seventh switching element SW7 to be in an off state. Through this, the battery management device 100 may control the battery system 150 to be charged in response to the power source of rated voltage of approximately 400 V.

According to the embodiment, when the operation mode is the second charging mode and the connection mode is determined as the multi-connection mode, one or more processors 130 may control the first battery pack P1 and the second battery pack P2 to be connected in series with each other. For example, the one or more processors 130 may control the third switching element SW3 and the fourth switching element SW4 to be in an on state, and control the remaining switching elements to be in the off state. Therefore, one or more processors 130 may control the voltage V0 of the battery system 150 to be approximately 800 V by connecting the first battery pack P1 with a rated voltage of approximately 400 V and the second battery pack P2 with a rated voltage of approximately 400 V in series with each other, and may control the battery system 150 to be charged by a high-voltage power source (e.g., a rated voltage of approximately 800 V). Through this, the battery management device 100 may control the battery system 150 to be charged in response to power sources having various rated voltages (e.g., the rated voltage of approximately 400 V or rated voltage of approximately 800 V). In addition, the battery management device 100 may charge the battery system 150 more quickly through a rapid charging power source having a rated voltage higher than the rated voltage of the battery pack.

According to the embodiment, when the operation mode is the first discharging mode and the connection mode is determined as the single connection mode, one or more processors 130 may control the selection switching unit to control the first battery pack P1 or the second battery pack P2 to be connected to the load. For example, the one or more processors 130 may control the first switching element SW1 to be in an off state to block the connection between the first battery pack P1 and the second battery pack P2. Through this, one or more processors 130 may insulate the first battery pack P1 from each other and the second battery pack P2 and connect the first battery pack P1 to the load.

According to the embodiment, in the first discharging mode described above, when the output voltage V2 of the first battery pack P1 is approximately 0 or when a failure occurs in the first battery pack P1, one or more processors 130 may change the battery pack used in the single connection mode from the first battery pack P1 to the second battery pack P2. For example, in the single connection mode, one or more processors 130 may decide to discharge the second battery pack P2 instead of the first battery pack P1. In this case, one or more processors 130 may control the first switching element SW1, the fourth switching element SW4, the fifth switching element SW5, the sixth switching element SW6, and the seventh switching element SW7 to be in the on state, and control the remaining switching elements to be in the off state. Through this, the battery management device 100 may supply bypass power to the load by connecting the second battery pack P2 to the load.

According to the embodiment, when the operation mode is the second discharging mode and the connection mode is determined as the multi-connection mode, one or more processors 130 may control the selection switching unit to control the first battery pack P1 and the second battery pack P2 to be connected in parallel with each other. For example, the one or more processors 130 may control the first switching element SW1, the fourth switching element SW4, the fifth switching element SW5, the sixth switching element SW6, and the seventh switching element SW7 to be in the on state, and control the remaining switching elements to be in the off state. Through this, the battery management device 100 may extend the discharge duration of the battery system 150 by discharging the battery system 150 while the first battery pack P1 and the second battery pack P2 are connected in parallel, each other compared to the case where only the first battery pack P1 is discharged. For example, the battery management device 100 may determine the operation mode of the battery system 150 as the second discharging mode when the vehicle including the battery system 150 is driven long distances, and simultaneously discharge the first battery pack P1 and the second battery pack P, thereby increasing the driving distance of the vehicle by 2.

According to the embodiment, when the operation mode is the second discharging mode and the connection mode is determined as the multi-connection mode, one or more processors 130 may control the output voltage V2 of the conversion circuit 120 so that the voltage of the second battery pack P2 converted by the conversion circuit 120 corresponds to the voltage of the first battery pack P1. For example, one or more processors 130 may compare the voltage of the first battery pack P1 and the voltage of the second battery pack P2 based on the voltage of the first battery pack P1 and the voltage of the second battery pack P2 obtained through the interface 110. In addition, one or more processors 130 may control the conversion circuit 120 when a voltage difference value, which is a difference between the voltage of the second battery pack P2 and the voltage of the first battery pack P1, is larger than a predetermined threshold value. Here, the predetermined threshold value may mean a value that serves as a reference for performing the buck-boost operation of the conversion circuit 120, and may vary depending on the specifications of the battery system 150. For example, the predetermined threshold value may mean that the difference between the voltage of the first battery pack P1 and the voltage of the second battery pack P2 is approximately 5% of the voltage of the first battery pack P1.

According to the embodiment, one or more processors 130 may control the buck switching unit 121 and the boost switching unit 122 so that the output voltage V2 of the conversion circuit 120 has a value corresponding to the voltage of the first battery pack P1. For example, as illustrated in FIG. 4, one or more processors 130 may control the output voltage V2 of the conversion circuit 120 by controlling the first switching element SW1 to the fourth switching element SW4 included in the buck switching unit 121 and the boost switching unit 122.

Referring to FIG. 4, in section a, when the first switching element SW1 of the buck switching unit 121 is in the on state and the second switching element SW2 is in the off state, one or more processors 130 may convert the output voltage V2 of the conversion circuit 120 to a value larger than the input voltage V1 by controlling the third switching element SW3 of the boost switching unit 122 to be in the on state and the fourth switching element SW4 thereof to be in the off state. In addition, in section b, when the third switching element SW3 of the boost switching unit 122 is in the off state and the fourth switching element SW4 thereof is in the on state, one or more processors 130 may convert the output voltage V2 of the conversion circuit 120 to a value smaller than the input voltage V1 by controlling the first switching element SW1 of the buck switching unit 121 to be in the off state and the second switching element SW2 thereof to be in the on state.

Through this, one or more processors 130 may control the conversion circuit 120 to operate as a buck-boost converter by controlling the switching elements of each of the buck switching unit 121 and the boost switching unit 122.

According to the embodiment, one or more processors 130 may control the magnitude of the voltage to be converted based on the control time of each switching element of the buck switching unit 121 and the boost switching unit 122. For example, one or more processors 130 may control the on or off time of each of the first switching element SW1 to the fourth switching element SW4 to manage the output voltage V2 of the conversion circuit 120.

For example, one or more processors 130 may control an amount of change, which is the degree to which the output voltage V2 is stepped down compared to the input voltage V1, by controlling the time during which the first switching element SW1 is in an off state and the second switching element SW2 is in an on state. In addition, one or more processors 130 may control the amount of change, which is the degree to which the output voltage V2 is stepped up compared to the input voltage V1, by controlling the time during which the third switching element SW3 is the on state and the fourth switching element SW4 is in the off state.

According to the embodiment, the amount of change by which the output voltage V2 is stepped up or stepped down compared to the input voltage V1 may be proportional to the control time of the switch. In another aspect, the amount of change in the output voltage V2 of the conversion circuit 120 may be proportional to the conduction time of the buck switching unit 121 and the boost switching unit 122. Through this, one or more processors 130 may control the amount of change in the output voltage V2 by controlling the conduction time (i.e., on or off time) of each of the switching elements of the buck switching unit 121 and the boost switching unit 122.

According to the embodiment, one or more processors 130 may control the first switching element SW1 to the fourth switching element SW4 to control the conversion circuit 120 to perform a buck operation and a boost operation when the voltage difference between the first battery pack P1 and the second battery pack P2 is larger than a first threshold value (e.g., approximately 5%) and smaller than a second threshold value (e.g., approximately 10%). According to the embodiment, one or more processors 130 may control the first switching element SW1 to the fourth switching element SW4 to control the conversion circuit 120 to perform one of the buck operation and the boost operation when the voltage difference between the first battery pack P1 and the second battery pack P2 is larger than a second threshold value (e.g., approximately 10%). Here, one or more processors 130 may control the conversion circuit 120 to perform either the buck operation or the boost operation until the voltage difference value becomes within the first threshold value.

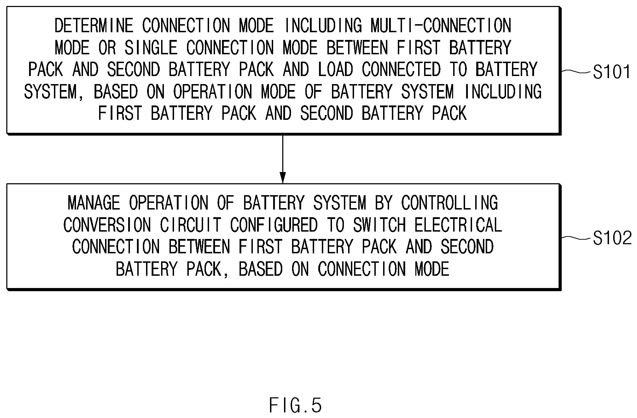

FIG. 5 is a flowchart showing an operation of the battery management device according to an embodiment disclosed in this document.

Referring to FIG. 5, the battery management device 100 may determine a connection mode including a multi-connection mode or a single connection mode between the first battery pack and the second battery pack and a load connected to the battery system based on an operation mode of the battery system including the first battery pack and the second battery pack (S101), and manage the operation of the battery system by controlling the conversion circuit configured to switch the electrical connection between the first battery pack and the second battery pack based on the connection mode (S102).

In step S101, one or more processors 130 of the battery management device 100 may determine the connection mode including the multi-connection mode or the single connection mode between the first battery pack and the second battery pack and the load connected to the battery system based on the operation mode of the battery system including the first battery pack and the second battery pack.

In step S102, one or more processors 130 may manage the operation of the battery system by controlling a conversion circuit configured to switch the electrical connection between the first battery pack and the second battery pack based on the connection mode. According to the embodiment, the interface 110 may obtain the voltage of the first battery pack and the voltage of the second battery pack. In addition, one or more processors 130 may control a buck switching unit and a boost switching unit so that the output voltage of the conversion circuit has a value corresponding to the voltage of the first battery pack when a voltage difference value, which is a difference between the voltage of the second battery pack and the voltage of the first battery pack, is larger than a predetermined threshold value based on the obtained voltage.

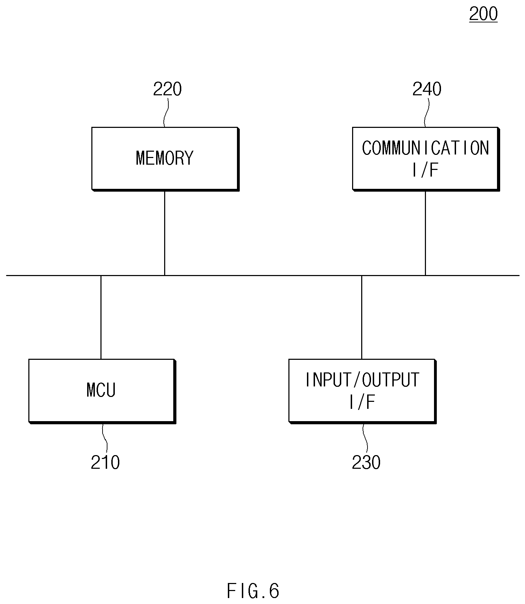

FIG. 6 is a block diagram showing a hardware configuration of a computing system for performing an operating method of a battery management device according to an embodiment disclosed in this document.

Referring to FIG. 6, a computing system 200 according to an embodiment disclosed in this document may include an MCU 210, a memory 220, an input/output I/F 230, and a communication I/F 240.

The MCU 210 may be a processor that executes various programs (e.g., battery data collection programs, graph generation programs, data analysis programs, data decomposition algorithms, normalization programs, battery cell diagnosis programs, etc.) stored in the memory 220, processes various information including characteristic data, latent variables, etc. of the battery cell through these programs, and performs the functions of the battery management device 100 shown in FIGS. 1 to 5 described above.

The memory 220 may store various programs such as the battery data collection program, the graph generation program, the data analysis program, the data decomposition algorithm, the normalization program, the battery cell diagnosis program, etc.

A plurality of such memories 220 may be provided as needed. The memory 220 may be a volatile memory or a nonvolatile memory. The memory 220 as the volatile memory may be RAM, DRAM, SRAM, or the like. The memory 220 as the nonvolatile memory may be ROM, PROM, EAROM, EPROM, EEPROM, flash memory, etc. The examples of the memories 220 listed above are only examples and are not limited to these examples.

The input/output I/F 230 may provide an interface that allows data to be transmitted and received between an input device (not shown) such as a keyboard, mouse, or touch panel, and an output device (not shown) such as a display and the MCU 210.

The communication I/F 240 is a configuration that can transmit and receive various data with the server, and may be various devices that can support wired or wireless communication. For example, the battery management device 100 may transmit and receive various information, including a shape model of a battery cell, to and from a separately provided external server through the communication I/F 240.

In this way, the computer program according to an embodiment disclosed in this document may be implemented as a module that performs, for example, each function shown in FIG. 1, by being recorded in the memory 220 and processed by the MCU 210.

In the above, even though all the components constituting the embodiments disclosed in this document have been described as being combined as one or operating in combination, the embodiments disclosed in this document are not necessarily limited to these embodiments. That is, within the scope of the purpose of the embodiments disclosed in this document, all of the components may be selectively combined and operated in combination as one or more.

The terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The disclosure described above outlines features of several embodiments so that those skilled in the art may better understand the aspects of the present disclosure. Those skilled in the art will understand that the present disclosure may easily be used as a basis for designing or modifying other structures to perform the same purposes or achieve the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

## Claims

1. A battery management device comprising:
a conversion circuit configured to switch an electrical connection between a first battery pack and a second battery pack; and
one or more processors configured to determine, based on an operation mode of a battery system including the first battery pack and the second battery pack, a connection mode including a multi-connection mode or a single connection mode between the first battery pack and the second battery pack and a load connected to the battery system and manage an operation of the battery system by controlling the conversion circuit based on the connection mode.

2. The battery management device of claim 1, wherein the conversion circuit includes:
a buck switching unit configured to convert an input voltage value input to the conversion circuit to a value smaller than the input voltage value;
a boost switching unit configured to convert the input voltage value input to the conversion circuit to a value larger than the input voltage value; and
a selection switching unit configured to switch the connection mode.

3. The battery management device of claim 2, wherein the buck switching unit includes a first switching element and a second switching element,
the boost switching unit includes a third switching element and a fourth switching element, and
the selection switching unit includes a fifth switching element, a sixth switching element, and a seventh switching element.

4. The battery management device of claim 3, wherein the conversion circuit further includes an inductor configured such that one end thereof is connected to a first node to which the first switching element, the second switching element, and the fifth switching element are connected, and the other end thereof is connected to a second node to which the third switching element, the fourth switching element, and the sixth switching element are connected, and
the input voltage is applied to the fourth switching element and the seventh switching element, and an output voltage of the conversion circuit is applied to the first switching element and the seventh switching element.

5. The battery management device of claim 2, wherein the operation mode includes a first discharging mode for discharging one of the first battery pack and the second battery pack, or a second discharging mode for discharging the first battery pack and the second battery pack.

6. The battery management device of claim 5, wherein the one or more processors are configured to:
determine the connection mode as the single connection mode, which is a mode for connecting one of the first battery pack and the second battery pack and the load, when the operation mode is the first discharging mode; and
determine the connection mode as the multi-connection mode, which is a mode for connecting the first battery pack and the second battery pack in parallel with each other, when the operation mode is the second discharging mode.

7. The battery management device of claim 6, wherein the one or more processors are configured to control the selection switching unit to control the first battery pack to be connected in parallel with the second battery pack, when the connection mode is determined as the multi-connection mode.

8. The battery management device of claim 7, wherein the battery management device further includes an interface configured to obtain a voltage of the first battery pack and a voltage of the second battery pack, and
the one or more processors are configured to control the buck switching unit and the boost switching unit so that the output voltage of the conversion circuit has a value corresponding to the voltage of the first battery pack when a voltage difference value, which is a difference between the voltage of the second battery pack and the voltage of the first battery pack, is larger than a predetermined threshold value.

9. The battery management device of claim 8, wherein an amount of change in the output voltage of the conversion circuit is proportional to the conduction time of the buck switching unit and the boost switching unit, and
the one or more processors manage the output voltage of the conversion circuit by controlling the conduction time.

10. The battery management device of claim 6, wherein the one or more processors control the selection switching unit to control the first battery pack or the second battery pack to be connected to the load when the connection mode is determined as the single connection mode.

11. An operating method of a battery management device, comprising:
determining, based on an operation mode of a battery system including the first battery pack and the second battery pack, a connection mode including a multi-connection mode or a single connection mode between the first battery pack and the second battery pack and a load connected to the battery system; and
managing an operation of the battery system by controlling a conversion circuit configured to switch an electrical connection between the first battery pack and the second battery pack, based on the connection mode.

12. The operating method of claim 11, wherein the conversion circuit includes:
a buck switching unit configured to convert an input voltage value input to the conversion circuit to a value smaller than the input voltage value;
a boost switching unit configured to convert the input voltage value input to the conversion circuit to a value larger than the input voltage value; and
a selection switching unit configured to switch the connection mode.

13. The operating method of claim 12, wherein the buck switching unit includes a first switching element and a second switching element,
the boost switching unit includes a third switching element and a fourth switching element, and
the selection switching unit includes a fifth switching element, a sixth switching element, and a seventh switching element.

14. The operating method of claim 13, wherein the conversion circuit further includes an inductor configured such that one end thereof is connected to a first node to which the first switching element, the second switching element, and the fifth switching element are connected, and the other end thereof is connected to a second node to which the third switching element, the fourth switching element, and the sixth switching element are connected, and
the input voltage is applied to the fourth switching element and the seventh switching element, and an output voltage of the conversion circuit is applied to the first switching element and the seventh switching element.

15. The operating method of claim 12, wherein the operation mode includes a first discharging mode for discharging one of the first battery pack and the second battery pack, or a second discharging mode for discharging the first battery pack and the second battery pack.

16. The operating method of claim 15, wherein, in the determining of the connection mode, the connection mode is determined as the single connection mode, which is a mode for connecting one of the first battery pack and the second battery pack and the load, when the operation mode is the first discharging mode, and the connection mode is determined as the multi-connection mode, which is a mode for connecting the first battery pack and the second battery pack in parallel with each other, when the operation mode is the second discharging mode.

17. The operating method of claim 16, wherein the managing of the power of the battery system includes controlling the selection switching unit to control the first battery pack to be connected in parallel with the second battery pack, when the connection mode is determined as the multi-connection mode.

18. The operating method of claim 17, further comprising:
obtaining a voltage of the first battery pack and a voltage of the second battery pack,
wherein the managing of the power of the battery system includes controlling the buck switching unit and the boost switching unit so that the output voltage of the conversion circuit has a value corresponding to the voltage of the first battery pack when a voltage difference value, which is a difference between the voltage of the second battery pack and the voltage of the first battery pack, is greater than a predetermined threshold value.

19. The operating method of claim 18, wherein an amount of change in the output voltage of the conversion circuit is proportional to the conduction time of the buck switching unit and the boost switching unit, and
the one or more processors manages the output voltage of the conversion circuit by controlling the conduction time.

20. The operating method of claim 16, wherein, in the managing of the power of the battery system the selection switching unit is controlled to control the first battery pack or the second battery pack to be connected to the load when the connection mode is determined as the single connection mode.
